# EUROPEAN PATENT APPLICATION

(11) **EP 4 844 442 A1**
(43) Date of publication of application: **25.11.2026**
(21) Application number: 25178358.5
(22) Date of filing: 22.05.2025
(51) Int. Cl.: G01S 13/42, G01S 13/931, H01Q 21/06

(54) **A RADAR SYSTEM EXPLOITING ANTENNA ARRAY POINT SYMMETRY**

(71) Applicant: Magna Electronics Sweden AB, 447 37 Vårgårda (SE)
(72) Inventor: Marsch, Sebastian, 97464 Niederwerrn (DE)
(74) Representative: Westpatent AB

(57) **Abstract**

An automotive radar system (110, 120) comprising a radar transceiver module (110) and a radar processing module (120),
where the radar transceiver module (110) comprises an antenna array (300) with antenna elements that exhibit point symmetry about a symmetry point (350) on the surface (360)
where the radar transceiver module (110) is arranged to emit radar signals from one or more transmit antennas of the antenna array (300) and receive corresponding radar signal backscatter via one or more receive antenna elements of the antenna array (300), where each transmit-receive antenna element pair forms a radar channel of the automotive radar system (110, 120),
where the radar processing module (120) comprises processing circuitry (610) adapted to
obtain a first set of snapshots for each radar channel of the antenna array (300) by transmitting a corresponding number of radar signals over the channel,
obtain a second set of snapshots for each channel by rearranging and conjugating the data in the first set of snapshots according to the point symmetry of the antenna array, and
determine direction of arrival, DOA, of one or more detected objects in an environment surrounding the automotive radar system (110, 120) by identifying a spectral content of the first and second set of snapshots.

## Description

### TECHNICAL FIELD

The present disclosure relates to automotive radar systems configured to detect direction of arrival (DOA), i.e., azimuth and/or elevation angle, using multiple antenna elements arranged in an antenna array. The disclosure also relates to vehicles comprising an antenna array-based automotive radar system.

### BACKGROUND

Automotive radar systems are prevalent in modern vehicles, where radar systems are used for convenience functions such as automatic cruise control (ACC) and for safety-related functions such as automated emergency braking (AEB).

Most automotive radar systems provide information related to the range and radial velocity (Doppler) of nearby objects. Some more advanced automotive radar systems comprise antenna arrays that provide information indicative of the direction of arrival (DOA) of radar backscatter generated by the objects in terms of azimuth and/or elevation angle. This DOA data can be used to more accurately position nearby objects, and also to distinguish two or more objects located close to each other, such as a motorcycle located near a car at a similar range from the radar system.

Detection of DOA is normally improved if the size of the antenna array, in terms of physical dimension and/or in terms of number of antenna elements, is increased. However, large antenna arrays may not always be feasible due to footprint and are also more costly.

There is a desire to improve DOA detection in a robust and cost-efficient manner.

### SUMMARY

It is an objective of the present disclosure to provide improved or at least alternative automotive radar systems. This objective is obtained by an automotive radar system comprising a radar transceiver module and a radar processing module. The radar transceiver module comprises an antenna array with antenna elements that exhibit point symmetry about a symmetry point on the surface. The symmetry point can for instance correspond to a centroid of the distribution of antenna elements. The radar transceiver module is arranged to emit radar signals from one or more transmit antennas of the antenna array and to receive corresponding radar signal backscatter via one or more receive antenna elements of the antenna array. The transmit antenna elements and the receive antenna elements may be the same physical antenna elements or different physical antenna elements. Each transmit-receive antenna element pair forms a radar channel of the automotive radar system, and it is understood that there are several such radar channels. The radar processing module comprises processing circuitry adapted to obtain a first set of snapshots for each radar channel of the antenna array by transmitting a corresponding number of radar signals over the channel, obtain a second set of snapshots for each channel by rearranging and conjugating the data in the first set of snapshots according to the point symmetry of the antenna array, and determine direction of arrival (DOA) of one or more detected objects in an environment surrounding the automotive radar system by identifying a spectral content of the first and the second set of snapshots.

This way the efficiency of the automotive radar system is improved in terms of how well the automotive radar system can determine DOA. The ability of the automotive radar system to distinguish targets close to each other is improved, which is an advantage.

A further advantage of the automotive radar system is that the requirements on antenna aperture size is decreased, since the effective number of snapshots is effectively increased by application of the techniques described herein.

According to some aspects, the processing circuitry is adapted to identify spectral content of the first and second set of snapshots by a super-resolution spectral estimation algorithm that operates on the first and second set of snapshots, such as a MUltiple Signal Classification (MUSIC) algorithm or an algorithm based on Capons method. Both the MUSIC method and the Capon method are known in the art. However, a combination of one of these super-resolution algorithms together with the technique based on point symmetry disclosed herein has been found to yield good results in terms of angular resolution of the automotive radar system.

The antenna array comprises at least three antenna elements distributed on a surface and separated from each other in at least two dimensions. A boresight direction of the antenna array is normal to this surface. However, it is appreciated that many different reference systems can be used with the same or at least similar technical effect.

According to some aspects, the antenna elements are positioned on the vertices of a rectangular grid, where the vertices are separated by a distance corresponding to half of a wavelength of a radar signal emitted by the automotive radar system. The positions on the grid simplify computations and numerical derivations used in the implementation. However, other geometries can of course also be used. The antenna array can be a sparse antenna array.

The automotive radar system preferably comprises at least 64 antenna elements, although a smaller number of antenna elements can also be used. There is at least one transmit antenna element, although more than one transmit antenna element is normally preferred. The antenna elements are preferably formed as patch antenna elements on a printed circuit board (PCB) which extends in a plane aligned with the antenna element surface.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
- Figures 1A-B: illustrate an example vehicle comprising a radar system;
- Figure 2: schematically illustrates symmetric DOA of radar backscatter;
- Figure 3: illustrates an example point symmetric antenna array;
- Figures 4A-B: show example DOA detection results;
- Figure 5: is a flow chart that illustrates a method; and
- Figure 6: shows an example control unit comprising processing circuitry.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

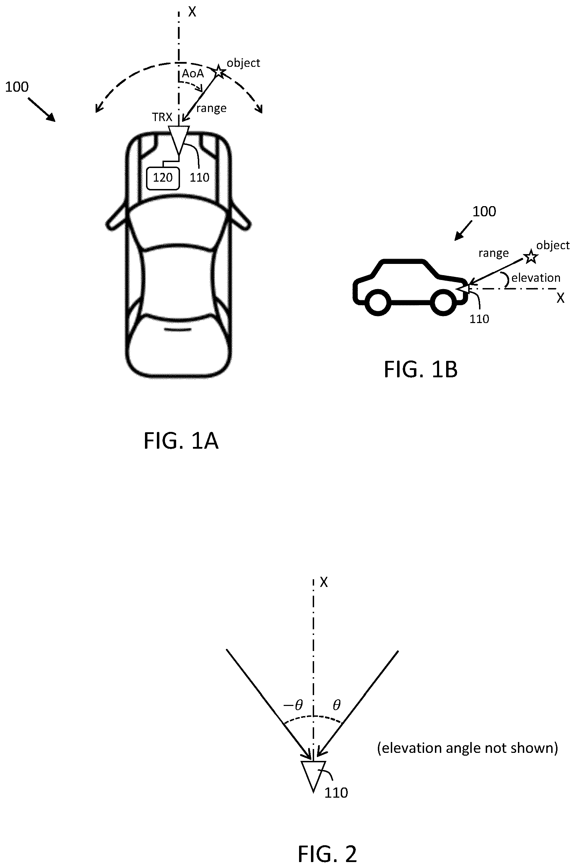

Figures 1A-B schematically illustrate a vehicle 100 with an automotive radar system that comprises a radar transceiver module 110 and a radar processing module 120. Figure 1A shows a top view of the vehicle 100 and Figure 1B shows a side view of the vehicle 100. The radar transceiver module 110 generates a radar signal which is emitted via one or more transmit antennas of an antenna array. Backscatter from the surrounding environment is received via one or more receive antennas of the antenna array. There are at least three antenna elements in the antenna array, i.e., more than one transmit antenna and/or more than one receive antenna element. This allows the radar transceiver module 110 to be used for determining the direction of arrival (DOA) of backscatter from detected objects. There are normally much more than three antenna elements, e.g., 64 elements or more.

DOA may comprise an azimuth angle measured in the horizontal plane as indicated in Figure 1A, and/or an elevation angle measured in the vertical plane as indicated in Figure 1B. It is, however, appreciated that the DOA with respect to a detected object can be defined in many different reference systems. The present disclosure is not limited to any particular reference system, although it is appreciated that azimuth and elevation angle is a relatively common reference system used with automotive radar systems. The techniques discussed herein can be used to determine DOA in terms of azimuth (sometimes also referred to as bearing) and/or in terms of elevation. I.e., it is possible that the automotive radar system only determines azimuth angle, only determines elevation angle, or that the system determines both azimuth and elevation angle. Azimuth angle or bearing will be denoted herein by *θ*. Elevation angle will be denoted herein by *ψ*.

The automotive radar systems disclosed herein are mainly exemplified using a front radar system. However, the techniques are general in the sense that they can be applied in a corner radar or a rearward facing radar without modification.

The antenna array of the radar transceiver module 110 comprises a plurality of antenna elements. The antenna elements are distributed on a surface and separated from each other in at least two dimensions, such as an y dimension and a z dimension. Planar surface antenna arrays will be used as example herein, although it is appreciated that the surface of the antenna array does not have to be planar. Curved surface antenna arrays are also possible. The antenna array has a boresight direction, indicated in Figures 1A-B by the dash-dotted line X. The boresight direction is often but not always normal to the surface of the antenna array. The boresight direction X of the antenna array is a reference direction used to define, e.g., directions of arrival in terms of azimuth angle and elevation angle.

The vehicle 100 may, generally, comprise any number of radar transceiver modules and any number of radar processing modules. A radar processing module may process backscatter data from one or more radar transceiver modules. The radar transceiver module may also be integrated with the radar processing module to form a single physical unit.

Figure 2 shows an example radar transceiver module 110 that receives backscatter from two different angles *θ* and -*θ*. In general there can be more than one object that generates backscatter, and the objects that generate radar signal backscatter can be both stationary and moving objects. The DOA can be determined by analyzing the phase progression over the receive antenna elements. Elevation angle is not shown in Figure 2.

To give an example, suppose that the radar system uses a uniform linear array (ULA) of receive antennas spaced a fixed distance apart - typically half a wavelength (λ/2) - to avoid spatial aliasing. The automotive radar system transmits a radar signal and receives backscatter from a target. The signal returns to the radar and impinges on the antenna array at some angle θ relative to the array boar sight reference direction.

Each antenna element receives a version of the same radar backscatter signal, but with a phase shift that depends on the arrival angle θ.

For an array with N elements and inter-element spacing d = λ/2, the signal at the n-th antenna (assuming a single frequency component for simplicity) can be modeled as: ${s}_{n} \left(t\right) = {Ae}^{j \left(2πft-\left(n-1\right)ϕ\right)}$ where:
- *A* is the amplitude,
- *f* is the carrier frequency,
- $ϕ = \frac{2 πd sin θ}{λ}$ is the phase shift between elements,
- *n* ∈ {1,2, *..., N*}

The automotive radar system samples the received radar backscatter at each antenna and computes the relative phase differences between adjacent antennas. These differences correspond to a progressive phase shift over the receive antenna array due to the angle of arrival *θ*.

From the set of received signals, the radar can construct what may be referred to as a steering vector ***a***(*θ*), $a \left(θ\right) = \left[\begin{matrix}1 \\ {e}^{- jϕ} \\ {e}^{- j 2 ϕ} \\ ⋮ \\ {e}^{- j \left(N-1\right) ϕ}\end{matrix}\right]$

The radar system can then compare the measured signal vector (over the receive antenna elements) to these idealized steering vectors using methods like:
Beamforming: Scan through angles and find the direction that maximizes output power.
MUSIC (Multiple Signal Classification): A subspace method that exploits the orthogonality between noise and signal subspaces.
ESPRIT (Estimation of Signal Parameters via Rotational Invariance Techniques): A fast subspace method requiring certain array structure.
CAPON (named after its inventor): The beamformer is a solution of a constrained optimization problem to minimize noise while allowing response for true signals.

Using one of the above methods, the radar finds the angle θ that best fits the measured phase progression across the array. This gives the direction of arrival of the reflected radar signal - and thus the angular position of the target.

In an automotive radar system, this technique allows the vehicle to locate objects (cars, pedestrians, etc.) in azimuth and elevation angle, even if they are at the same range and move at the same relative radial velocity with respect to the antenna array of the automotive radar system. By combining this with range and Doppler data, the system can build a full 2D or 3D situational awareness map.

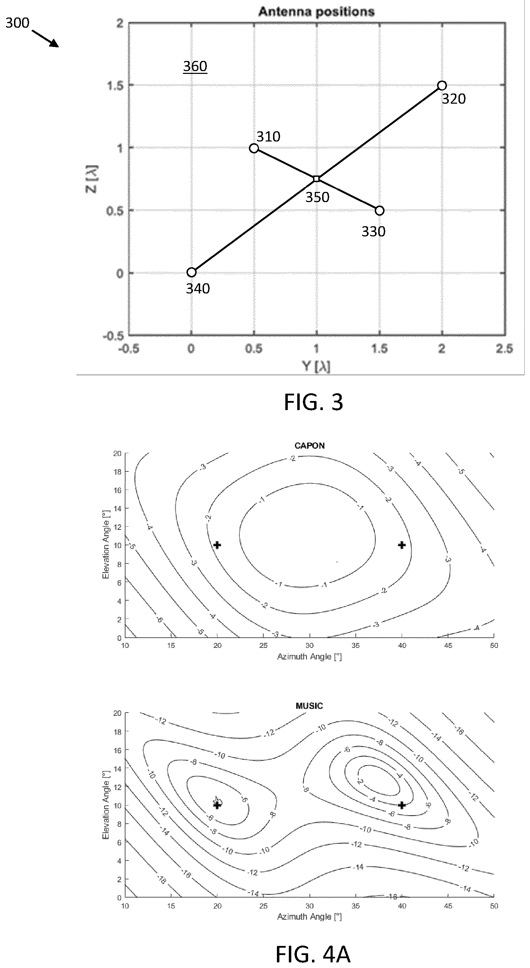

Figure 3 illustrates an example antenna array 300. This example antenna array 300 exhibits point symmetry in that there exists a point on the antenna plane where a 180° rotation (with rotation axis parallel to the sensor X-axis) of the virtual antenna elements around this point yields the same set of virtual antenna positions.

The key idea is that signal from a DOA (-*θ*; -*ψ*) is conjugate complex to the signal from the DOA (*θ*; *ψ*), where *θ* denotes Azimuth and *ψ* Elevation. To understand this, consider a signal from a DOA (*θ*; *ψ*) and a signal from a DOA (-*θ*; -*ψ*):
A rotation of 180° around the x-axis of the sensor will negate both the azimuth and the elevation angle. Thus, if the relative positions of the virtual antenna array are invariant to its 180° rotated version, this rotated array will see a target by its negated azimuth and elevation angle. Conjugating these channel values will therefore yield an additional observation of this target with the same phase progression in both the y direction and the z direction of the antenna array.

Put more formally, neglecting signal amplitude A: $s \left(y, z, θ, ψ\right) = {e}^{j 2 π \left(sin θ∗cos ψ∗y+sin ψ∗z\right)}$ $\begin{matrix}s \left(y,z,-θ,-ψ\right) = {e}^{j 2 π \left(sin -θ∗cos -ψ∗γ+sin -ψ∗z\right)} = {e}^{- j 2 π \left(sin θ∗cos ψ∗y+sin ψ∗z\right)} \\ = conj \left(s\left(y, z, θ, ψ\right)\right)\end{matrix}$ where y and z are representative of the position of the antenna element in the antenna array.

It is appreciated that the complete antenna spacing (in MIMO often called the virtual spacing) should be point symmetric, i.e., not only the transmit antenna elements.

In automotive radar systems, determining the angle of arrival (AoA) of targets is critical for accurately locating objects around the vehicle. To achieve this, multi-snapshot super-resolution algorithms like MUSIC (MUltiple Signal Classification) and CAPON (also known as the Minimum Variance Distortionless Response, MVDR) are used. These algorithms process the radar data from antenna arrays to estimate DOA of signals reflected by objects.

All the multi-snapshot algorithms calculate a matrix that contains the correlation values between antenna channels, which is often referred to as the sample correlation matrix. These correlation values get improved the more observations (snapshots) of the channels that are available.

In automotive radar systems, accurately determining the DOA of incoming radar backscatter is important in applications such as lane keeping, obstacle avoidance, and adaptive cruise control. Traditional methods like conventional beamforming offer a straightforward approach to angle estimation by scanning through spatial directions and measuring received power. However, these classical methods suffer from limited angular resolution, particularly when multiple targets are closely spaced in angle.

To overcome these limitations, multi-snapshot super-resolution algorithms such as MUSIC (MUltiple Signal Classification) or the Capon algorithm (also known as Minimum Variance Distortionless Response, or MVDR) can be used. These algorithms provide significantly enhanced resolution and accuracy by leveraging statistical models of the received signals.

Classic beamforming methods are fundamentally limited by the array's physical aperture and the main lobe width of the array pattern. This means closely spaced targets in angle often appear as one merged signal. MUSIC and CAPON reduces the effects of this limitation. Both algorithms benefit from the use of multiple temporal snapshots, i.e., repeated measurements over time, which allows for averaging out both noise and interference. The result is a more reliable estimate of the spatial covariance matrix, which directly affects the sharpness and stability of the DOA estimate. In automotive radar applications, radar backscatter often includes multipath reflections and sometimes also interference from other vehicles radar systems. Super-resolution methods like MUSIC and CAPON are more robust in these conditions. The eigenvalue decomposition used in the MUSIC method isolates the signal subspace, allowing the automotive radar system to distinguish between true targets and noise or interference. The CAPON method adaptively weights the array elements to null out interference.

Automotive radars are constrained by size and cost, limiting the number of antennas and overall aperture size. Super-resolution techniques enable high angular resolution even with relatively small arrays by exploiting the structure of the signal model rather than relying solely on physical aperture.

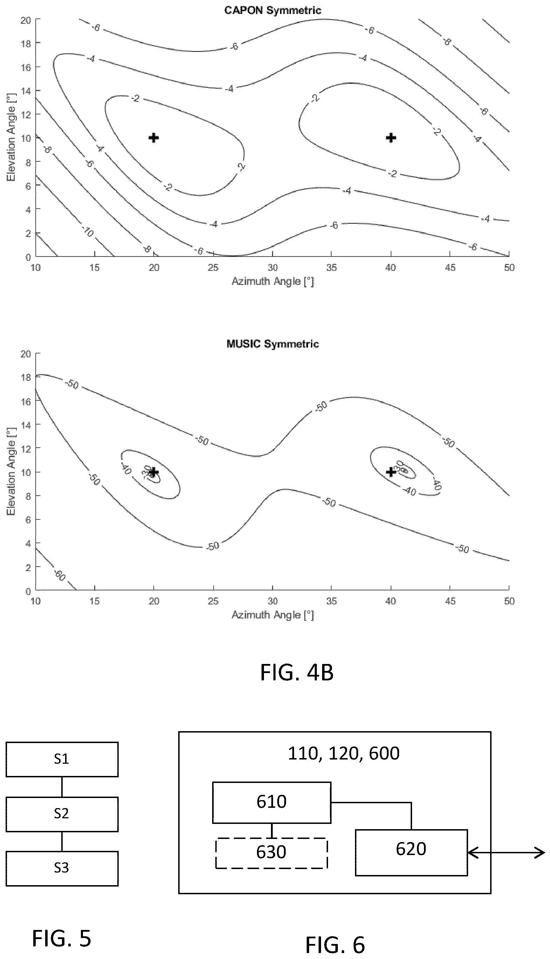

Figures 4A-B illustrate the results of a comparison study. Figure 4A shows results without the symmetry-based duplication, i.e., without using the second set of snapshots for each channel that have been obtained by rearranging and conjugating the data in the first set of snapshots according to the point symmetry of the antenna array. Figure 4B shows the results when the second set of snapshots is used. The Figures illustrate likelihood of a target as function of elevation and azimuth angle.

The CAPON and the MUSIC algorithms are applied to the same test data. In Figure 4A the symmetry-based method described herein is not used. Figure 4B shows what happens when the methods described herein are applied. Note that the results in Figure 4B are considerably improved compared to the results in Figure 4A.

For the CAPON method, the result on the left is a single peak, which means that the two targets are not distinguished from each other. Two peaks are clearly visible on the right, after application of the techniques described herein.

The MUSIC method performs slightly better than the CAPON method overall, and is able to distinguish the two targets in both cases. However, the two peaks on the right are more pronounced on the right, after application of the techniques described herein.

To summarize, we have described an automotive radar system 110, 120 that comprises a radar transceiver module 110 and a radar processing module 120, where the radar transceiver module 110 comprises an antenna array 300 with antenna elements that exhibit point symmetry about a symmetry point 350 on the surface 360. The radar transceiver module 110 is arranged to emit radar signals from one or more transmit antennas of the antenna array 300 and receive corresponding radar signal backscatter via one or more receive antenna elements of the antenna array 300, where each transmit-receive antenna element pair forms a radar channel of the automotive radar system 110, 120, in a known manner. The radar processing module 120 comprises processing circuitry 610 adapted to:
obtain a first set of snapshots for each radar channel of the antenna array 300 by transmitting a corresponding number of radar signals over the channel,
obtain a second set of snapshots for each channel by rearranging and conjugating the data in the first set of snapshots according to the point symmetry of the antenna array, and
determine direction of arrival, DOA, of one or more detected objects in an environment surrounding the automotive radar system 110, 120 by identifying a spectral content of the first and second set of snapshots.

This way the number of available snapshots is effectively doubled, since a "virtual" additional set of snapshots is obtained by rearranging and conjugating the data in the first set of snapshots according to the point symmetry of the antenna array. The more snapshots that are available to, e.g., a super-resolution method such as the MUSIC method or the Capon method, the better the angular resolution of the automotive radar system normally becomes. Thus, according to a preferred implementation, the processing circuitry 610 is adapted to identify spectral content of the first and second set of snapshots by a super-resolution spectral estimation algorithm that operates on the first and second set of snapshots.

According to a preferred embodiment, the antenna array 300 comprises at least three antenna elements 310, 320, 330, 340, distributed on a surface 360 and separated from each other in at least two dimensions Y, Z, where a boresight direction X of the antenna array 300 is normal to the surface 360. However, other antenna array geometries are of course also possible. The symmetry point 350 may correspond to a centroid of the distribution of antenna elements 310, 320, 330, 340.

According to some aspects, the automotive radar system 110, 120 comprises at least 64 antenna elements, and preferably two or more transmit antennas, although a single transmit antenna element is also possible.

The antenna elements may be formed as patch antenna elements on a PCB which extends in a plane aligned with the surface 360.

Figure 5 is a flow chart that illustrates a computer-implemented method performed by a radar processing module 120 in an automotive radar system 110, 120 comprising a radar transceiver module 110, where the radar transceiver module 110 comprises an antenna array 300 with antenna elements that exhibit point symmetry about a symmetry point 350 on the surface 360. The radar transceiver module 110 is arranged to emit radar signals from one or more transmit antennas of the antenna array 300 and receive corresponding radar signal backscatter via one or more receive antenna elements of the antenna array 300, where each transmit-receive antenna element pair forms a radar channel of the automotive radar system 110, 120, as discussed above. The method comprises

obtaining S1 a first set of snapshots for each radar channel of the antenna array 300 by transmitting a corresponding number of radar signals over the channel by the radar transceiver module 110,
obtaining S2 a second set of snapshots for each channel by rearranging and conjugating the data in the first set of snapshots according to the point symmetry of the antenna array, and
determining S3 direction of arrival, DOA, of one or more detected objects in an environment surrounding the automotive radar system 110, 120 by identifying a spectral content of the first and second set of snapshots.

Figure 6 schematically illustrates, in terms of a number of functional units, the general components of a control unit 600 for use with one or more functions of the radar systems discussed herein, such as the radar transceiver module 110 or the radar processing module 120.

Processing circuitry 610 is provided using any combination of one or more of a suitable central processing unit CPU, multiprocessor, microcontroller, digital signal processor DSP, etc., capable of executing software instructions stored in a computer program product, e.g., in the form of a storage medium 630. The processing circuitry 610 may further be provided as at least one application specific integrated circuit ASIC, or field programmable gate array FPGA.

Particularly, the processing circuitry 610 is configured to cause one or more control functions to perform a set of operations, or steps, such as the methods discussed herein. For example, the storage medium 630 may store the set of operations, and the processing circuitry 610 may be configured to retrieve the set of operations from the storage medium 630 to cause the device to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The device 600 may further comprise an interface 620 for communications with at least one external device, such as a dust extractor or the like. As such the interface 620 may comprise one or more transmitters and receivers, comprising analogue and digital components and a suitable number of ports for wireline or wireless communication.

The processing circuitry 610 controls the general operation of the control unit 600, e.g., by sending data and control signals to the interface 620 and the storage medium 630, by receiving data and reports from the interface 620, and by retrieving data and instructions from the storage medium 630.

There is also disclosed herein a computer readable medium carrying a computer program comprising program code means for performing the methods discussed herein, when said program product is run on a computer. The computer readable medium and the code means may together form a computer program product.

## Claims

1. An automotive radar system (110, 120) comprising a radar transceiver module (110) and a radar processing module (120),
where the radar transceiver module (110) comprises an antenna array (300) with antenna elements that exhibit point symmetry about a symmetry point (350) on the surface (360),
where the radar transceiver module (110) is arranged to emit radar signals from one or more transmit antennas of the antenna array (300) and receive corresponding radar signal backscatter via one or more receive antenna elements of the antenna array (300), where each transmit-receive antenna element pair forms a radar channel of the automotive radar system (110, 120),
where the radar processing module (120) comprises processing circuitry (610) adapted to
obtain a first set of snapshots for each radar channel of the antenna array (300) by transmitting a corresponding number of radar signals over the channel,
obtain a second set of snapshots for each channel by rearranging and conjugating the data in the first set of snapshots according to the point symmetry of the antenna array, and
determine direction of arrival, DOA, of one or more detected objects in an environment surrounding the automotive radar system (110, 120) by identifying a spectral content of the first and second set of snapshots.

2. The automotive radar system (110, 120) according to claim 1, where the processing circuitry (610) is adapted to identify spectral content of the first and second set of snapshots by a super-resolution spectral estimation algorithm that operates on the first and second set of snapshots.

3. The automotive radar system (110, 120) according to claim 2, where the super-resolution algorithm is a MUltiple Signal Classification, MUSIC, algorithm.

4. The automotive radar system (110, 120) according to claim 2, where the super-resolution algorithm is an algorithm based on Capons method.

5. The automotive radar system (110, 120) according to any one of the previous claims, where the antenna array (300) comprises at least three antenna elements (310, 320, 330, 340),
where the antenna elements (310, 320, 330, 340) are distributed on a surface (360) and separated from each other in at least two dimensions (Y, Z), and where a boresight direction (X) of the antenna array (300) is normal to the surface (360).

6. The automotive radar system (110, 120) according to any one of the previous claims, where the symmetry point (350) corresponds to a centroid of the distribution of antenna elements (310, 320, 330, 340).

7. The automotive radar system (110, 120) according to any one of the previous claims, where the antenna elements are positioned on the vertices of a rectangular grid, where the vertices are separated by a distance corresponding to half of a wavelength of a radar signal emitted by the automotive radar system (110, 120).

8. The automotive radar system (110, 120) according to any one of the previous claims, comprising at least 64 antenna elements.

9. The automotive radar system (110, 120) according to any one of the previous claims, comprising at least 1 transmit antenna element and at least 64 receive antenna elements.

10. The automotive radar system (110, 120) according to any one of the previous claims, where the antenna elements are formed as patch antenna elements on a printed circuit board, PCB, where the PCB extends in a plane aligned with the surface (360).

11. A vehicle comprising the automotive radar system (110, 120) according to any one of the previous claims.

12. A computer-implemented method performed by a radar processing module (120) in an automotive radar system (110, 120) comprising a radar transceiver module (110),
where the radar transceiver module (110) comprises an antenna array (300) with antenna elements that exhibit point symmetry about a symmetry point (350) on the surface (360)
where the radar transceiver module (110) is arranged to emit radar signals from one or more transmit antennas of the antenna array (300) and receive corresponding radar signal backscatter via one or more receive antenna elements of the antenna array (300), where each transmit-receive antenna element pair forms a radar channel of the automotive radar system (110, 120),
the method comprising
obtaining (S1) a first set of snapshots for each radar channel of the antenna array (300) by transmitting a corresponding number of radar signals over the channel by the radar transceiver module (110),
obtaining (S2) a second set of snapshots for each channel by rearranging and conjugating the data in the first set of snapshots according to the point symmetry of the antenna array, and
determining (S3) direction of arrival, DOA, of one or more detected objects in an environment surrounding the automotive radar system (110, 120) by identifying a spectral content of the first and second set of snapshots.

13. A computer program product comprising program code for performing, when executed by a radar processing module (120), the method of claim 12.
